# EUROPEAN PATENT APPLICATION

(11) **EP 2 819 259 A1**
(43) Date of publication of application: **31.12.2014**
(21) Application number: 13751286.9
(22) Date of filing: 11.01.2013
(51) Int. Cl.: H02H 3/02, H02H 3/00, H02H 3/05

(54) **INTEGRATION UNIT AND PROTECTION RELAY SYSTEM**

(30) Priority: 21.02.2012 JP 2012035326
(71) Applicant: Kabushiki Kaisha Toshiba, Minato-ku, Tokyo 105-8001 (JP)
(72) Inventor: MAEHARA, Hiroyuki, Tokyo 105-8001 (JP); KATAYAMA, Shigeki, Tokyo 105-8001 (JP); NISHIDA, Tomonori, Tokyo 105-8001 (JP); INUKAI, Michihiko, Tokyo 105-8001 (JP)
(74) Representative: Willquist, Sofia Ellinor
(86) International application number: PCT/JP2013/050457
(87) International publication number: WO 2013/125255

(57) **Abstract**

An integration unit for protecting a power system from a failure includes an A/D converter (11) configured to convert a quantity of electricity of a power system into digital data, a communication interface unit (12) configured to transmit the digital data to a process bus (30) connected to a protection unit (20) configured to protect the power system, and a relay calculation unit (13) configured to execute a relay calculation operation to detect an abnormality of the power system based on the digital data and to output, based on the calculation operation result, a circuit breaking signal to trip and drive a circuit breaker (44) inserted in the power system.

## Description

### Technical Field

Embodiments described herein relate generally to an integration unit and protective relay system for protecting a power system from a failure.

### Background Art

To measure a current or voltage of a power device, a current transformer or voltage transformer is used to transform the current or voltage of a power device main circuit into a current or voltage suitable for measurement. In a conventional substation, the transformed current or voltage is transmitted to a host device such as a protective relay or circuit control unit installed in a remote panel room via a cable connection. In contrast, a process bus is a method of A/D-converting the current or voltage of the power device near it and transmitting the sample value of the A/D-converted current or voltage to a host device in a form of serial communication. The host device may be one or a plurality of devices.

Along with the development of recent communications and digital control techniques, a process bus has been introduced in the protective relay system of a power system in a substation or the like. The importance of the process bus capable of sharing current or voltage sample values has received a great deal of attention to implement a smart grid. In the protective relay system employing such a process bus, an integration unit, a protection unit, and a circuit breaker control unit are connected to each other using the process bus via the respective communication interface units.

The integration unit is installed near the circuit breaker to which a power cable and the like are connected. The integration unit receives a current waveform signal measured by a current transformer or a voltage waveform signal measured by a voltage transformer. The current or voltage waveform signal is converted into a sample value (digital data) by an A/D converter in the integration unit. The digital data is transmitted to the process bus via the communication interface unit.

The protection unit receives the sample value of a waveform via the communication interface unit and transfers it to a relay calculation unit. The relay calculation unit performs calculation processing of failure determination. If it is determined that the circuit breaker should be tripped, the relay calculation unit transmits a tripping command message to the process bus via the communication interface. A plurality of protection units may transmit tripping command messages to a single circuit breaker.

Upon reception of the tripping command message via the communication interface unit, the circuit breaker control unit drives to trip the circuit breaker, thereby protecting the power device such as a power cable.

In the above protective relay system using the process bus, both the current or voltage waveform signal of the power system which serves as the basic information for failure determination and the circuit breaker tripping command message are transmitted via the process bus. For this reason, when a fault has occurred in the process bus and the process bus loses the transmission function for the current or voltage waveform signal and the circuit breaker tripping command message, the protection function is perfectly lost.

### [Prior Art Reference]

### [Patent Literature]

[Patent Literature 1]
Japanese Patent No. 3907998

### Summary of the Invention

A problem to be solved by the present invention is to provide an integration unit and protective relay system capable of maintaining the protection function of a power system even if a fault has occurred in the process bus.

### Solution to Problem

An integration unit according to this embodiment includes an A/D converter configured to convert a quantity of electricity of a power system into digital data, a communication interface unit configured to transmit the digital data to a process bus to which a protection unit configured to protect the power system is connected, and a relay calculation unit configured to execute a relay calculation operation to detect an abnormality of the power system based on the digital data and to output, based on a result of the calculation operation, a circuit breaking signal to trip and drive a circuit breaker inserted into the power system.

### Brief Description of Drawings

FIG. 1 is a block diagram showing the circuit arrangement of a protective relay system according to the first embodiment.
FIG. 2 is a block diagram showing the circuit arrangement of a protective relay system according to the second embodiment.
FIG. 3 is a block diagram showing the circuit arrangement of a protective relay system according to the third embodiment.
FIG. 4 is a block diagram showing the circuit arrangement of a protective relay system according to the fourth embodiment.
FIG. 5 is a block diagram showing the circuit arrangement of a protective relay system according to the fifth embodiment.

### Mode for Carrying Out the Invention

A protective relay system according to an embodiment will be described below with reference to the accompanying drawings.

### (First Embodiment)

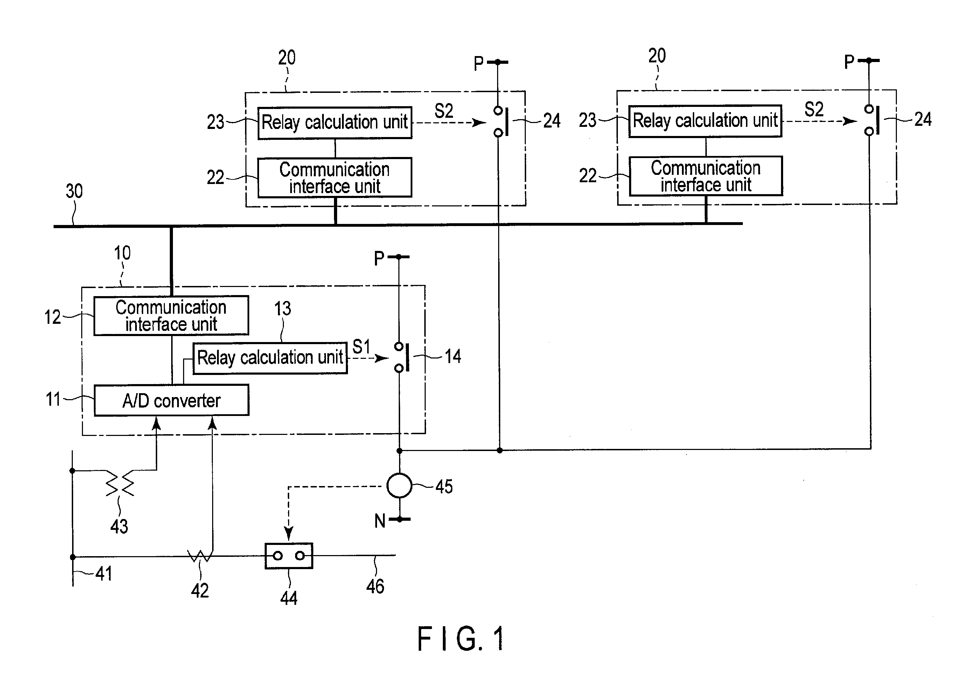

FIG. 1 is a block diagram showing the circuit arrangement of a protective relay system according to the first embodiment.

The protective relay system according to this embodiment is, for example, a protective relay system in a power system in a substation or the like. The protective relay system includes an integration unit 10 and protection units 20. The units 10 and 20 are respectively connected, via communication interface units 12 and 22, to a process bus 30. The protective relay system also includes a circuit breaker tripping circuit (14, 24, and 45) for tripping and driving a circuit breaker 44 by energizing a circuit breaker tripping coil 45. Note that a plurality of protection units 20 may be connected to the single process bus 30, as shown in FIG. 1.

The integration unit 10 includes a relay calculation unit 13 and contact 14 for circuit breaker control, in addition to an A/D converter 11 for converting a quantity of electricity into a digital signal and the communication interface unit 12 for exchanging information with the process bus 30. The integration unit 10 is arranged near the circuit breaker 44 connected to, for example, a power cable 46. The integration unit 10 receives a current waveform signal measured by a current transformer 42 or a voltage waveform signal measured by a voltage transformer 43. The current transformer 42 detects a change in current of the power cable 46, and the voltage transformer 43 detects a voltage of a bus 41.

On the other hand, the protection unit 20 includes the communication interface unit 22, a relay calculation unit 23, and a contact 24. The contacts 14 and 24 are connected to the circuit breaker tripping coil 45. When the coil 45 is energized upon opening/closing of the contacts 14 and 24, the circuit breaker 44 performs tripping operation.

Note that the relay calculation units 13 and 23 are used to detect abnormalities of the power system. For example, the relay calculation unit 23 is equivalent to a main detection relay, while the relay conversion unit 13 is equivalent to an FD (Failure Detection) relay. In addition, the relay calculation unit 23 may be equivalent to main protection, while the relay conversion unit 13 may be equivalent to backup protection. The type, function, operation value, operation time, and the like of relay calculation operations in the relay calculation unit 13 can be settled via the process bus 30.

The operation of this embodiment having the above arrangement will be described next.

First of all, the operation performed when the process bus 30 is in a normal state will be described. The current waveform signal measured by the current transformer 42 or the voltage waveform signal measured by the voltage transformer 43 is converted into a sample value by the A/D converter 11 in the integration unit 10. This sample value is transmitted to the process bus 30 via the communication interface unit 12 and at the same time to the relay calculation unit 13. The relay calculation unit 13 performs digital filter processing and relay calculation processing, thereby independently determining a failure. If the relay calculation unit 13 determines that tripping of the circuit breaker 44 is necessary, the relay calculation unit 13 outputs a first circuit breaking signal S1, thereby closing the contact 14.

On the other hand, the relay calculation unit 23 in the protection unit 20 performs independent failure determination based on the sample value received via the communication interface 22. If the relay calculation unit 23 determines that tripping of the circuit breaker is necessary, the unit 23 outputs a second circuit breaking signal S2, thereby closing the contact 24. When either the contact 14 or the contact 24 is closed, the tripping coil 45 is energized to trip the circuit breaker 44. This makes it possible to protect the power device such as the power cable 46.

The operation performed when an abnormality has occurred in the process bus 30 and a fault has occurred in the transmission function is as follows. The sample value does not reach some or all of the protection units 20, and the protection units 20 cannot determine the failure. For this reason, even if a failure occurs, the contact 24 may not be closed. However, since the relay calculation unit 13 in the integration unit 10 operates normally, if it is determined that tripping of the circuit breaker 44 is necessary, the contact 14 is closed to energize the tripping coil 45.

According to this embodiment, even if the fault has occurred in the transmission function of the process bus 30, the relay calculation unit 13 of the integration unit 10 operates. This makes it possible to perform the protection function for the power device such as the power cable.

### (Second Embodiment)

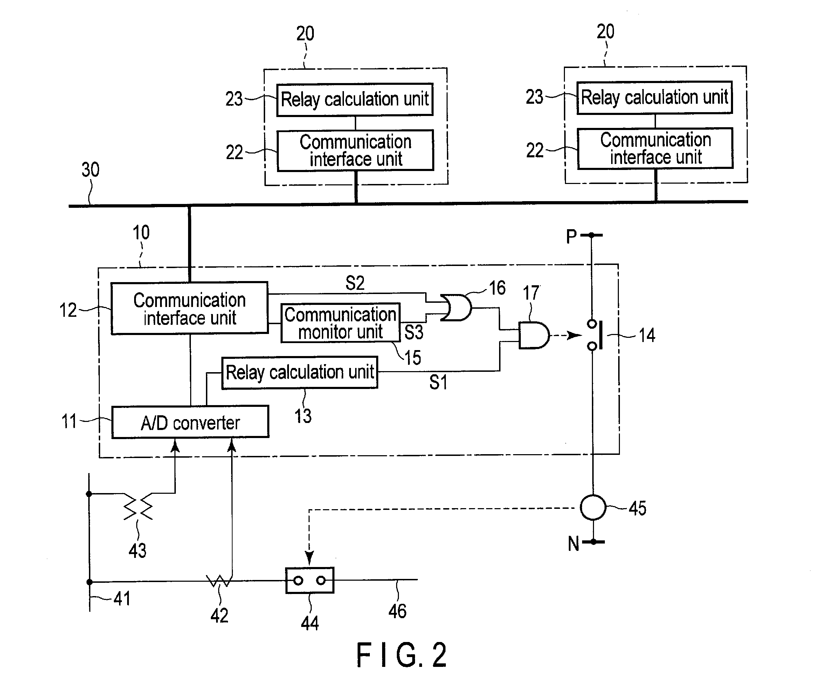

FIG. 2 is a block diagram showing the circuit arrangement of a protective relay system according to the second embodiment. The same reference numerals as in FIG. 1 denote the same parts in the second embodiment, and a detailed description thereof will be omitted.

The second embodiment is different from the first embodiment described above in that each protection unit 20 does not include a contact 24, and an abnormality detected by the protection unit 20 is sent to an integration unit 10 via a process bus 30.

The integration unit 10 of this embodiment includes a communication monitor unit 15, an OR gate 16, and an AND gate 17 in addition to an A/D converter 11, a communication interface unit 12, a relay calculation unit 13, and a contact 14. Specifically, a circuit breaker tripping circuit is constituted by the OR gate 16 and the AND gate 17 in addition to the contact 14 and a coil 45. In this embodiment, a relay calculation unit 23 is equivalent to the main detection relay, while the relay calculation unit 13 is equivalent to an FD relay. The communication monitor unit 15 can use a "PING" command, and its arrangement is not limited to a specific one.

A second circuit breaking signal S2 from the communication interface unit 12 and a communication defect signal S3 from the communication monitor unit 15, which detects abnormalities of the process bus 30, are supplied to the input terminals, respectively, of the OR gate 16. An output from the OR gate 16 is supplied to one input terminal of the AND gate 17. A first circuit breaking signal S1 from the relay calculation unit 13 is supplied to the other input terminal of the AND gate 17. An output from the AND gate 17 controls the contact 14. That is, the contact 14 is closed according to any one of cases (1) and (2) :
(1) both the first circuit breaking signal S1 and the second circuit breaking signal S2 are output; and
(2) both the first circuit breaking signal S1 and the communication abnormality signal S3 are output.

The rest is the same as in the first embodiment.

The operation performed when the process bus 30 is in a normal state will be described below. As in the first embodiment, the relay calculation unit 13 performs failure determination. If the relay calculation unit 13 determines that tripping of a circuit breaker 44 is necessary, the unit 13 outputs the first circuit breaking signal S1. The relay calculation unit 13 performs failure determination equivalent to, for example, that of the failure detection relay.

On the other hand, the relay calculation unit 23 in the protection unit 20 also performs failure determination. If the unit 23 determines tripping of the circuit breaker 44 is necessary, the unit 23 transmits a tripping command message to the process bus 30 via the communication interface 22. The relay calculation unit 23 performs failure determination equivalent to, for example that of a main detection relay. When the communication interface unit 12 in the integration unit 10 receives the tripping command message from any one of the protection units 20, the unit 12 outputs the second circuit breaking signal S2.

The failure determination methods executed in the relay calculation units 23 between the plurality of protection units 20 are different from each other. Even if the tripping command message is received from any one of the protection units, the circuit breaking signal S2 is output. Only when both of the circuit breaking signals S1 and S2 are output is the contact 14 closed to energize the tripping coil 45, thereby tripping the circuit breaker 44.

The operation performed when an abnormality has occurred in the process bus 30 and a fault has occurred in its transmission function is as follows. A sample value does not reach some or all of the protection units 20 and the failure determination may not be able to be performed. Even if a failure has occurred, a tripping command message may not be transmitted. However, since the communication monitor unit 15 in the integration unit 10 detects an abnormality of the process bus 30, the communication abnormality signal S3 is output. On the other hand, the relay calculation unit 13 operates normally. When the unit 13 determines that tripping of the circuit breaker 44 is necessary, the first circuit breaking signal S1 is output. When the communication abnormality signal S3 is obtained and the first circuit breaking signal S1 is output, the contact 14 is closed to energize the tripping coil 45.

As described above, according to this embodiment, when the process bus 30 is in an abnormal state, circuit breaking control can only be performed by the FD relay in addition to the circuit breaking control using the AND gate of the main detection relay and the FD relay.

As described above, this embodiment can easily arrange a fail-safe system (circuit breaking control using the AND gate of the main detection relay and the FD relay) including the main detection relay and the FD relay. In addition, even if the fault has occurred in the transmission function of the process bus 30, the failure detection relay operates singly, thereby achieving a minimum protection function.

Note that even if the communication monitor unit 15 and the OR gate 16 are omitted, the same fail-safe system as in the conventional system including the main detection relay and the FD relay can be implemented, although the protection function for the fault of the process bus 30 is absent.

### (Third Embodiment)

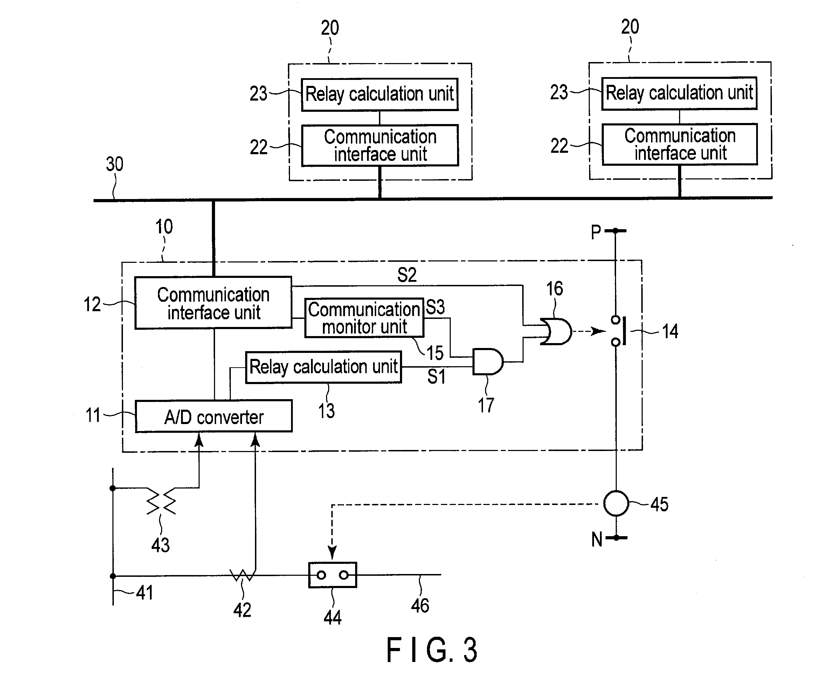

FIG. 3 is a block diagram showing the circuit arrangement of a protective relay system according to the third embodiment. The same reference numerals as in FIG. 1 denote the same parts in the third embodiment, and a detailed description thereof will be omitted.

An integration unit 10 of this embodiment includes a communication monitor unit 15, an OR gate 16, and an AND gate 17 in addition to an A/D converter 11, a communication interface unit 12, a relay calculation unit 13, and a contact 14. Note that in this embodiment, a relay calculation unit 23 is equivalent to a main relay protection, while the relay calculation unit 13 is equivalent to backup relay protection.

A first circuit breaking signal S1 from the relay calculation unit 13 and a communication defect signal S3 from the communication monitor unit 15 which detects the abnormality of a process bus 30 are respectively supplied to the input terminals of the AND gate 17. An output from the AND gate 17 is supplied to one input terminal of the OR gate 16. A second circuit breaking signal S2 from the communication interface 12 is supplied to the other input terminal of the OR gate 16. An output from the OR gate 16 controls the contact 14. That is, the contact 14 is closed according to any one of cases (1) and (2):
(1) the second circuit breaking signal S2 is output; and
(2) both the first circuit breaking signal S1 and the communication defect detection signal S3 are output.

The rest is the same as in the first embodiment.

The operation performed when the process bus 30 is in a normal state will be described below. As in the second embodiment, the relay calculation unit 13 performs failure determination. If the relay calculation unit 13 determines that tripping of a circuit breaker 44 is necessary, the unit 13 outputs the first circuit breaking signal S1. The relay calculation unit 13 performs failure determination equivalent to, for example, backup relay protection.

On the other hand, the relay calculation unit 23 in a protection unit 20 also performs failure determination. When the unit 23 determines that tripping of the circuit breaker 44 is necessary, the unit 23 transmits a tripping command message to the process bus 30. Upon reception of the tripping command message, the communication interface unit 12 outputs the second circuit breaking signal S2. The relay calculation unit 23 performs failure determination equivalent to, for example, main protection.

When the process bus 30 is in a normal state, the communication monitor unit 17 does not output the communication defect detection signal S3. Even if the first circuit breaking signal S1 is output, the contact 14 will not be closed. However, when the second circuit breaking signal S2 is output, the contact 14 is closed to implement the protection operation equivalent to the main protection.

The operation performed when an abnormality has occurred in the process bus 30 and its transmission function is lost is as follows. No sample value reaches the protection units 20, and failure determination cannot be performed. Even if a failure has occurred, no tripping command message is transmitted. However, since the communication monitor unit 15 outputs the communication defect detection signal S3, the output of the first circuit breaking signal S1 closes the contact 14. This can implement the protection operation equivalent to backup relay protection.

As described above, according to this embodiment, a backup protection system including the main protection and backup relay protection can be easily implemented. At the same time, even if the transmission function of the process bus 30 is lost, the backup relay protection operates singly. The minimum protection function can be therefore achieved.

Note that even if the communication monitor unit 15 and the AND gate 17 are omitted, the same fail-safe system present in the conventional one that includes the main protection and the backup protection can be implemented, although the protection function for a fault in the process bus 30 is absent.

### (Fourth Embodiment)

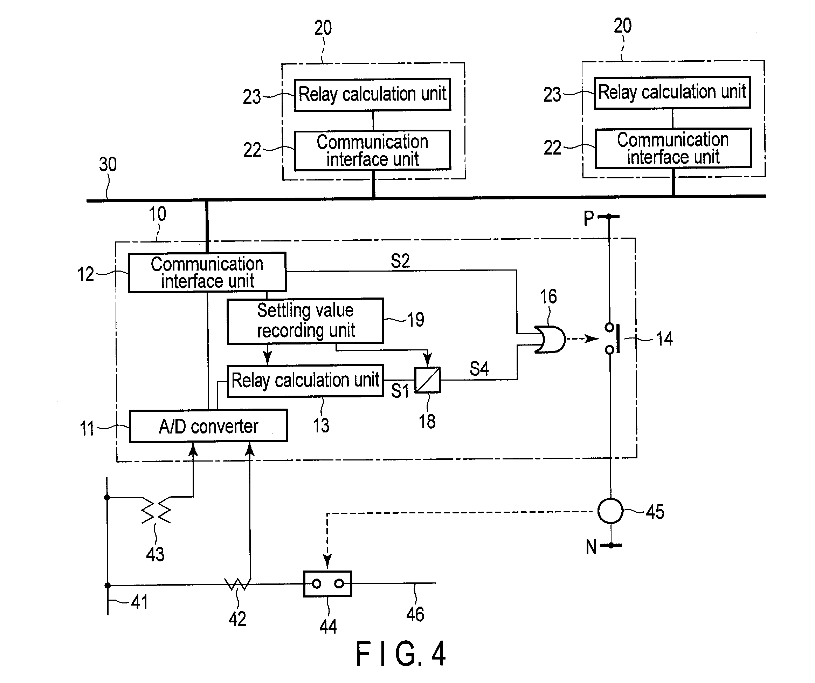

FIG. 4 is a block diagram showing the circuit arrangement of a protective relay system according to the fourth embodiment. The same reference numerals as in FIG. 1 denote the same parts in the fourth embodiment, and a detailed description thereof will be omitted.

An integration unit 10 of this embodiment includes an OR gate 16, a timer 18, and a settling value recording unit 19 in addition to an A/D converter 11, a communication interface unit 12, a relay calculation unit 13, and a contact 14. The settling value recording unit 19 is arranged to allow the communication interface 12 or an operation panel (not shown) to settle the type, function, operation value, operation time, and the settling time of the timer 18 of the relay calculation operation executed by the relay calculation unit 13

The timer 18 receives a first circuit breaking signal S1 from the relay calculation unit 13. The timer 18 delays the first circuit breaking signal S1 by the settling time recorded in advance in the settling value recording unit 19, thereby outputting a third circuit breaking signal S4. Upon receiving a tripping command message from any one of protection units 20, the communication interface unit 12 outputs a second circuit breaking signal S2. These circuit breaking signals S2 and S4 are respectively supplied to the input terminals of the OR gate 16. An output from the OR gate 16 controls the contact 14. That is, the contact 14 is closed by one of the circuit breaking signals S4 and S2. The rest is the same as in the second embodiment.

The operation performed when the process bus 30 is in a normal state will be described below. As in the third embodiment, the relay calculation unit 13 performs failure determination. If the relay calculation unit 13 determines that tripping of a circuit breaker 44 is necessary, the unit 13 outputs the first circuit breaking signal S1. After the output of the first circuit breaking signal S1, the third circuit breaking signal S4 is output with a delay corresponding only to the settling time recorded in advance in the settling value recording unit 19. The relay calculation unit 13 performs failure determination equivalent to backup relay protection in accordance with the settling recorded in advance in the settling value recording unit 19.

On the other hand, a relay calculation unit 23 in the protection unit 20 also performs failure determination. If the unit 23 determines that tripping of the circuit breaker 44 is necessary, the unit 23 outputs a tripping command message to the process bus 30. The relay calculation unit 23 performs the failure determination equivalent to, for example, the main protection. If the process bus 30 is in a normal state, the communication interface unit 12 receives the tripping command message and outputs the second circuit breaking signal S2. Although this process includes a delay due to the process bus communication, an intended delay element such as a timer is absent. For this reason, normally the second circuit breaking signal S2 is output prior to the third circuit breaking signal S4 to close the contact 14, thereby implementing the protection operation equivalent to the main protection.

The operation performed when an abnormality has occurred in the process bus 30 and its transmission function is lost is as follows. When a failure has occurred, no tripping command message is transmitted. For this reason, no second circuit breaking signal S2 is output. However, even in this case, the first circuit breaking signal S1 is output. With a delay for a predetermined period of time by the timer 18, the third circuit breaking signal S4 is output to close the contact 14, thereby implementing the protection operation equivalent to the backup relay protection.

As described above, according to the fourth embodiment, the conventional backup protection system including the main relay protection and the backup relay protection can be easily implemented as in the third embodiment. Even if the transmission function of the process bus 30 is lost, the backup relay protection operates singly to achieve the minimum protection function. The type, function, operation value, and operation time of the relay calculation operation executed by the integration unit 10 can be settled. At the same time, the time until the backup relay protection operation can be settled by the timer. Therefore, the protection cooperation of the entire protective relay system can be facilitated.

### (Fifth Embodiment)

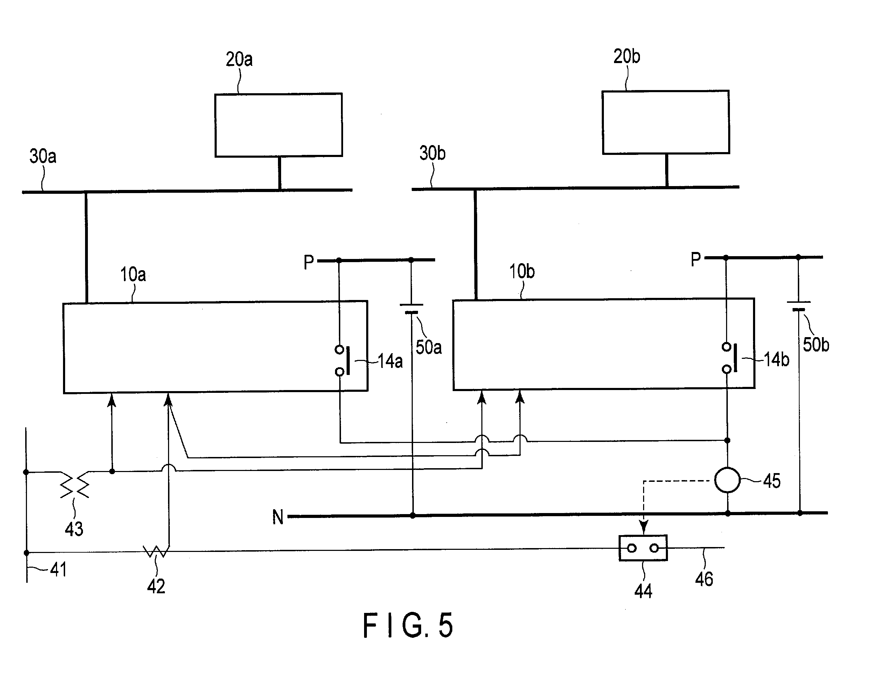

FIG. 5 is a block diagram showing the circuit arrangement of a protective relay system according to the fifth embodiment. The same reference numerals as in FIG. 1 denote the same parts in the fifth embodiment, and a detailed description thereof will be omitted.

In this embodiment, main protection and backup protection include two independent systems each including a process bus and units. A main protection integration unit 10a and a main protection unit 20a are connected via a main protection process bus 30a. On the other hand, a backup protection integration unit 10b and a backup protection unit 20b are connected to a backup protection process bus 30b different from the main protection process bus 30a. The process buses 30a and 30b include hubs, respectively. The hubs constituting the process buses 30a and 30b respectively receive power from a main protection control power supply 50a and a backup protection control power supply 50b, which are independent control power supplies.

The arrangement of the main protection integration unit 10a and the main protection unit 20a is the same as in each of the first to fourth embodiments. The arrangement of the backup protection integration unit 10b and the backup protection unit 20b is also the same as in each of the first to fourth embodiments. The arrangement of any one of the first to fourth embodiments can be appropriately selected in accordance with a target power system, the type of protection, and the like. The closing operation of a contact 14a arranged in the main protection integration unit 10a or a contact 14b arranged in the backup protection unit 20a drives a coil 45, thereby tripping and driving a circuit breaker 44. The rest is the same as in the first embodiment.

The operation performed when the process buses 30a and 30b are in a normal state will be described below. The main protection system and the backup protection system operate in the same manner as in the first to fourth embodiments. When an abnormality has occurred in a power system, the main protection system and the backup protection system detect the abnormality. The contact 14a of the main protection system or the contact 14b of the backup protection system is closed to energize the tripping coil 45. The circuit breaker 44 is tripped and driven.

When the transmission function of either the process bus 30a or 30b is lost, the two systems operate independently of each other. For this reason, a system including the process bus free from the abnormality detects the abnormality of the power system, thereby implementing the protection operation. Even in a system including the process bus with an abnormality, the relay calculation operation in the integration unit is used to implement the protection operation as in the first to fourth embodiments. This means that even if the transmission functions of the two process buses 30a and 30b are lost, the protection operation for the abnormality of the power system can be implemented.

The hubs constituting the process buses 30a and 30b do not receive power from a common power supply, but respectively receive power from the main protection control power supply 50a and the backup protection control power supply 50b. Even if a fault occurs in any one of the control power supplies 50a and 50b and the hubs, the protection operation for the abnormality of the power system can be implemented.

Such a process bus duplication method is not limited to that in FIG. 5 but complies with PRP (Parallel Redundancy Protocol) defined in, for example, international standard IEC62439.

As described above, according to this embodiment, the conventional backup protection system including the main protection and the backup relay protection can be easily implemented. At the same time, even if the transmission function of any one of the process buses is lost, a satisfactory protection function can be achieved.

### (Modifications)

Note that the present invention is not limited to the embodiments described above.

In the first embodiment, different contacts are driven in the integration unit and the protection unit. However, one contact may be driven when one of the first and second circuit breaking signals is obtained. In the second embodiment, contacts driven by signals input to the input terminals of the AND gate may be connected in series in place of using the AND gate and the contact driven by the AND gate. Similarly, in the third embodiment, contacts driven by the signals supplied to the input terminals of the OR gate may be connected in series in place of using the OR gate and the contact driven by the OR gate.

In the fifth embodiment, each of the protection unit and the integration unit is separated into the main protection unit and the backup protection unit. However, only one of the protection unit and the integration unit may be separated into main protection and backup protection units. The circuit arrangement of each unit constituting the integration unit is not limited to a specific one, but can be arbitrarily changed depending on specifications.

The above embodiments have mainly exemplified the substations. However, the present invention is also applicable to a smart grid to which distributed power supplies are introduced, or a power receiving/distributing device in a large-scale factory.

While certain embodiments of the inventions have been described, these embodiments have been presented by way of examples only, and are not intended to limit the scope of the inventions. Indeed, the methods and systems described herein may be embodied in a variety of other forms; furthermore, various omissions, substitutions and changes in the form of the methods and systems described herein may be made without departing from the spirit of the inventions. The appended claims and their equivalents are intended to cover such forms or modifications as would fall within the scope and spirit of the inventions.

## Claims

1. An integration unit **characterized by** comprising:
an A/D converter configured to convert a quantity of electricity of a power system into digital data;
a communication interface unit configured to transmit the digital data to a process bus to which a protection unit configured to protect the power system is connected; and
a relay calculation unit configured to execute a relay calculation operation to detect an abnormality of the power system based on the digital data and to output, based on a result of the calculation operation, a circuit breaking signal to trip and drive a circuit breaker inserted into the power system.

2. An integration unit **characterized by** comprising:
an A/D converter configured to convert a quantity of electricity of a power system into digital data;
a relay calculation unit configured to execute a relay calculation operation to detect an abnormality of the power system based on the digital data and to output, based on a result of the calculation operation, a first circuit breaking signal to trip and drive a circuit breaker inserted into the power system;
a communication interface unit configured to transmit the digital data, via the process bus, to a protection unit configured to output a second circuit breaking signal to trip and drive the circuit breaker; and
a circuit breaker tripping circuit configured to trip and drive the circuit breaker based on the first circuit breaking signal and the second circuit breaking signal.

3. The integration unit according to claim 2, **characterized in that** the circuit breaker tripping circuit trips and drives the circuit breaker when at least one of the first circuit breaking signal and the second circuit breaking signal is obtained.

4. The integration unit according to claim 2, **characterized in that** the circuit breaker tripping circuit trips and drives the circuit breaker when the second circuit breaking signal is obtained via the process bus or a defect of the process bus is detected and when the first circuit breaking signal is obtained.

5. The integration unit according to claim 2, **characterized in that** the circuit breaker tripping circuit trips and drives the circuit breaker when a defect of the process bus is detected and the first circuit breaking signal is obtained, or when the second circuit breaking signal is obtained via the process bus.

6. The integration unit according to claim 2, **characterized in that** the circuit breaker tripping circuit trips and drives the circuit breaker when a predetermined period of time has elapsed after obtaining the first circuit breaking signal, or when the second circuit breaking signal is obtained via the process bus.

7. The integration unit according to claim 6, **characterized in that** a type, a function, an operation value, and an operation time of the relay calculation operation or the predetermined period of time are settled via the process bus.

8. A protective relay system **characterized by** comprising:
an integration unit configured to convert a quantity of electricity of a power system into digital data and transmit the digital data to a process bus, execute a relay calculation operation to detect an abnormality of the power system based on the digital data, and to output a first circuit breaking signal based on a result of the calculation operation;
a protection unit configured to receive the digital data from the process bus and execute a relay calculation operation to detect an abnormality of the power system, and to output a second circuit breaking signal based on a result of the calculation operation; and
a circuit breaker tripping circuit configured to trip and drive the circuit breaker installed in the power system, based on the first circuit breaking signal and the second circuit breaking signal.

9. The protective relay system according to claim 8, **characterized in that** the circuit breaker tripping circuit trips and drives the circuit breaker when at least one of the first circuit breaking signal and the second circuit breaking signal is obtained.

10. The protective relay system according to claim 8, **characterized in that**
the protection unit has a function of transmitting the second circuit breaking signal to the process bus, and
the integration unit has a function of receiving the second circuit breaking signal from the process bus.

11. The protective relay system according to claim 10, **characterized in that** the circuit breaker tripping circuit trips and drives the circuit breaker when the second circuit breaking signal is obtained via the process bus, or a defect of the process bus is detected and when the first circuit breaking signal is obtained.

12. The protective relay system according to claim 10, **characterized in that** the circuit breaker tripping circuit trips and drives the circuit breaker when a defect of the process bus is detected and the first circuit breaking signal is obtained, or when the second circuit breaking signal is obtained via the process bus.

13. The protective relay system according to claim 10, **characterized in that** the circuit breaker tripping circuit trips and drives the circuit breaker when a predetermined period of time has elapsed after obtaining an output of the first circuit breaking signal, or when the second circuit breaking signal is obtained via the process bus.

14. The protective relay system according to claim 13, **characterized in that** the integration unit settles a type, a function, an operation value, and an operation time of the relay calculation operation executed in the integration unit or the predetermined period of time via the process bus.

15. The protective relay system according to claim 8, **characterized in that** at least one of the integration unit and the protection unit is separated into a main protection unit and a backup protection unit.

16. The protective relay system according to claim 8, **characterized in that** each of the integration unit and the protection unit is separated into a main protection unit and a backup protection unit, and each unit of the main protection unit and each unit of the backup protection unit are connected to different process buses.

17. The protective relay system according to claim 16, **characterized in that** the process buses include hubs, respectively, and the hubs receive power from independent control power supplies.
